# EUROPEAN PATENT APPLICATION

(11) **EP 4 629 672 A1**
(43) Date of publication of application: **08.10.2025**
(21) Application number: 24182701.3
(22) Date of filing: 17.06.2024
(51) Int. Cl.: H04W 4/80, A24F 40/42, A24F 40/65

(54) **AEROSOL PROVISION DEVICE**

(30) Priority: 02.04.2024 CN 202410395246
(71) Applicant: Nicoventures Trading Limited, London WC2R 3LA (GB)
(72) Inventor: XIAO, Zhihuang, London (GB); LIN, Hao, Shanghai (CN)
(74) Representative: Whiting, Gary

(57) **Abstract**

An aerosol provision device is described comprising a near-field communication tag (for use, in combination with an external device, for unlocking said aerosol provision device from an initially locked state) and a near-field communication reader (configured to read a near-field communication tag of an article for use in the aerosol provision device).

## Description

### Technical Field

The present specification relates to an aerosol provision device, a method of controlling such as device, and a system including an aerosol provision device.

### Background

Aerosol provision devices are known that produce an aerosol during use, which is inhaled by a user. For example, tobacco heating devices heat an aerosol generating substrate (such as tobacco) to form an aerosol by heating, but not burning, the substrate. There remains a need for further developments in this field.

### Summary

In a first aspect, this specification describes a method (e.g. a method of controlling an aerosol provision device), the method comprising: using a near-field communication tag of an aerosol provision device to provide an identifier for the aerosol provision device to an external device in response to a prompt from a near-field communication reader of the external device, wherein the identifier is used to transition the device from a locked state to an unlocked state under the control of said external device; and using a near-field communication reader of the aerosol provision device to read a near-field communication tag of an article for use in the aerosol provision device in said unlocked state. The external device may be a mobile communication device (or similar device). Alternatively, or in addition, the external device may be a point-of-sale device.

The method may further comprise using the near-field communication reader of the aerosol provision device to identify said article.

Some example embodiments further comprise managing the article based, at least in part, on information obtained from said article by said near-field communication reader.

Some example embodiments further comprise communicating information obtained from said article by said near-field communication reader to said external device.

In a second aspect, this specification describes an aerosol provision device comprising: a near-field communication tag for use, in combination with an external device, for unlocking said aerosol provision device from an initially locked state; and a near-field communication reader configured to read a near-field communication tag of an article for use in the aerosol provision device. The external device may be a mobile communication device (or similar device). Alternatively, or in addition, the external device may be a point-of-sale device.

The near-field communication reader of the aerosol provision device may be configured to identify said article.

Some example embodiments further comprise a wireless communications module for communicating with said external device in the unlocked state.

In some example embodiments, the wireless communication module is configured to communicate information obtained from said article by said near-field communication reader to said external device.

In a third aspect, this specification describes a system (e.g. an aerosol provision system), the system comprising an aerosol provision device as defined above with respect to the second aspect and further comprises said external device. The external device may be configured to unlock the aerosol provision device in the event that the identifier is recognised by the external device. The external device may comprise a user interface. The external device may be a mobile communication device (or similar device). Alternatively, or in addition, the external device may be a point-of-sale device.

In a fourth aspect, this specification describes computer-readable instructions which, when executed by a computing apparatus, cause the computing apparatus to perform (at least) any method as described herein (including the method of the first aspect described above).

In a fifth aspect, this specification describes a computer-readable medium (such as a non-transitory computer-readable medium) comprising program instructions stored thereon for performing (at least) any method as described herein (including the method of the first aspect described above).

In a sixth aspect, this specification describes an apparatus comprising: at least one processor; and at least one memory including computer program code which, when executed by the at least one processor, causes the apparatus to perform (at least) any method as described herein (including the method of the first aspect described above).

In a seventh aspect, this specification describes a computer program comprising instructions for causing an apparatus to perform at least the following: provide an identifier for an aerosol provision device as stored at a near-field communication tag of the aerosol provision device to an external device in response to a prompt from a near-field communication reader of the external device, wherein the identifier is used to transition the device from a locked state to an unlocked state under the control of said external device; and read a near-field communication tag of an article for use in the aerosol provision device in said unlocked state using a near-field communication reader of the aerosol provision device to read a near-field communication.

### Brief Description of the Drawings

Example embodiments will now be described, by way of example only, with reference to the following schematic drawings, in which:
FIG. 1 is a block diagram of a non-combustible aerosol provision device that may be used in some example embodiments;
FIG. 2 is a block diagram of a non-combustible aerosol provision device that may be used in some example embodiments;
FIG. 3 is a block diagram of a system in accordance with an example embodiment;
FIG. 4 is a flow chart showing an algorithm in accordance with an example embodiment;
FIG. 5 is a block diagram of a system in accordance with an example embodiment;
FIG. 6 is a flow chart showing an algorithm in accordance with an example embodiment;
FIG. 7 is a flow chart showing an algorithm in accordance with an example embodiment;
FIG. 8 is a block diagram of a system in accordance with an example embodiment;
FIG. 9 is a flow chart showing an algorithm in accordance with an example embodiment;
FIG. 10 is a flow chart showing an algorithm in accordance with an example embodiment;
FIG. 11 is a block diagram of a system in accordance with an example embodiment;
FIG. 12 is a flow chart showing an algorithm in accordance with an example embodiment; and
FIG. 13 is a block diagram of a processing system that may be used to implement one or more example embodiments.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

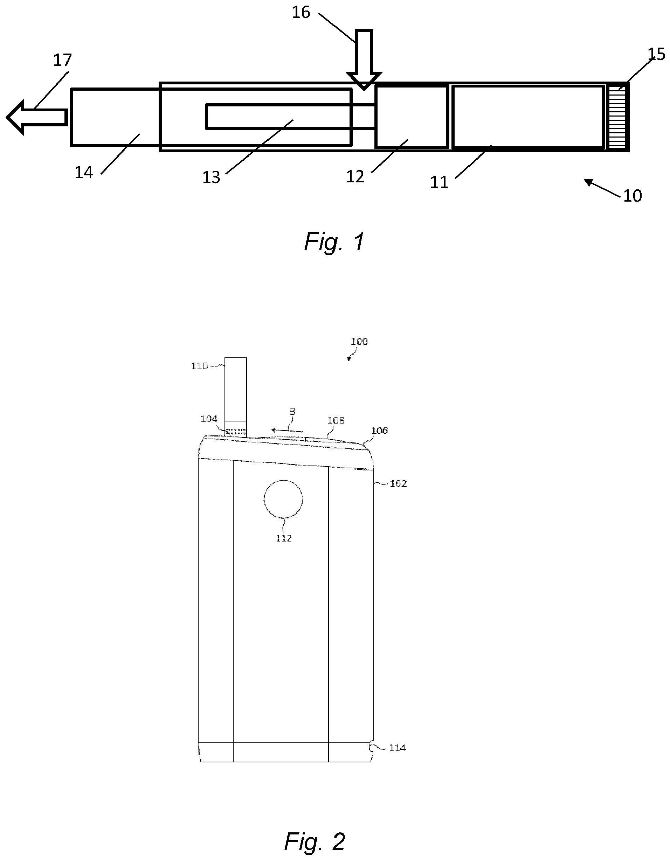

FIG. 1 is a block diagram of a non-combustible aerosol provision device, indicated generally by the reference numeral 10, that may be used in some example embodiments.

The aerosol provision device 10 comprises a battery 11, a control circuit 12, a heater 13 and a consumable 14 (e.g. a tobacco consumable, for example in the form of a tobacco stick, or some other replaceable consumable). The device also includes a connector 15 (such as a USB connector). The connector 15 may enable connection to be made to a power source for charging the battery 11, for example under the control of the control circuit 12.

In the use of the device 10, the heater 13 is inserted into the consumable 14, such that the consumable may be heated to generate an aerosol (and tobacco flavour, in the case of a tobacco consumable) for the user. When a user inhales at the end of the consumable, as indicated by arrow 17, the air is drawn into the device 10, through an air inlet as indicated by arrow 16, then passes through the consumable, delivering the aerosol (and tobacco flavour, in the case of a tobacco consumable) to the user.

FIG. 2 is a block diagram of a non-combustible aerosol provision device, indicated generally by the reference numeral 100, that may be used in some example embodiments.

The device 100 is an example of a non-combustible aerosol provision device for generating aerosol from an aerosol generating medium/material. In broad outline, the device 100 may be used to heat a replaceable article 110 comprising an aerosol generating medium to generate an aerosol or other inhalable medium which is inhaled by a user of the device 100. The device 100 and replaceable article 110 together form a system.

The device 100 comprises a housing 102 (in the form of an outer cover) which surrounds and houses various components of the device 100. The device 100 has an opening 104 in one end, through which the article 110 may be inserted for heating by a heating assembly. In use, the article 110 may be fully or partially inserted into the heating assembly where it may be heated by one or more components of the heating assembly.

The device 100 of this example comprises a first end member 106 which comprises a lid 108 which is moveable relative to the first end member 106 to close the opening 104 when no article 110 is in place. In FIG. 1, the lid 108 is shown in an open configuration, however the lid 108 may move into a closed configuration. For example, a user may cause the lid 108 to slide in the direction of arrow "B".

The device 100 may also include a user-operable control element 112, such as a button or switch, which operates the device 100 when pressed. For example, a user may turn on the device 100 by operating the switch 112.

The device 100 may also comprise an electrical component, such as a socket/port 114, which can receive a cable to charge a battery of the device 100. For example, the socket 114 may be a charging port, such as a USB charging port.

The device 100 may also comprise a near-field communication (NFC) reader that is configured to read an NFC tag of another device, as discussed in detail below.

The aerosol provision devices 10 and 100 are described by way of example only. Many alternative aerosol provision devices may be used in example implementations of the principles described here. For example, a vaping device may be provided in which an aerosol generating material (e.g. a liquid) is heated to generate the aerosol.

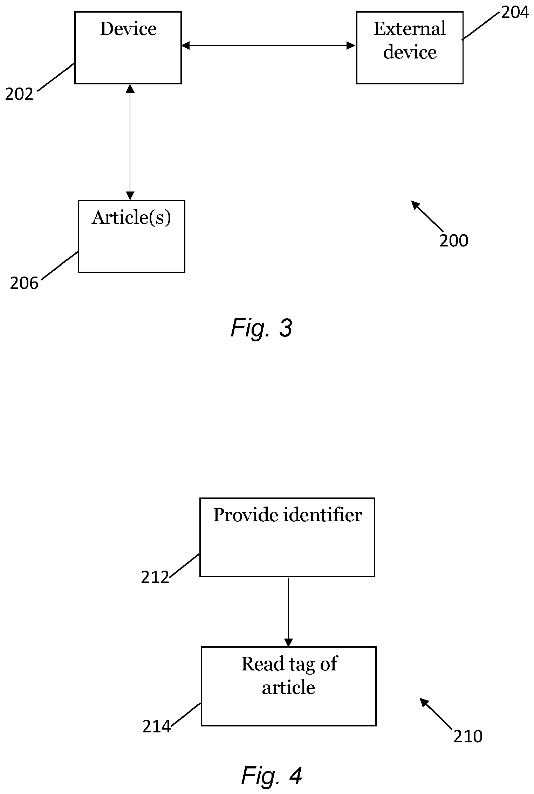

FIG. 3 is a block diagram of a system, indicated generally by the reference numeral 200, in accordance with an example embodiment. The system 200 includes an aerosol provision device 202 (such as one of the non-combustible aerosol provision devices 10 and 100 discussed above), an external device 204 (e.g. a mobile communication device (such as a mobile phone or some other mobile computing device) or a point-of-sale device) and one or more articles 206 for use with the an aerosol provision device 202. The article(s) 206 may be the consumable 14, the article 110 or some similar article. As discussed in detail below, the device 202 may be in two-way communication with the external device 204 and/or the article(s) 206.

FIG. 4 is a flow chart showing an algorithm, indicated generally by the reference numeral 210, in accordance with an example embodiment. The algorithm 210 may be implemented at the aerosol provision device 202 of the system 200 described above.

The algorithm 210 starts at operation 212 where a near-field communication (NFC) tag of the aerosol provision device 202 is used to provide an identifier for the aerosol provision device to the external device 204 in response to a prompt from an NFC reader of the external device. As discussed in detail below, the identifier can be used to transition the device 202 from a locked state to an unlocked state under the control of the external device.

At operation 214, an NFC reader of the aerosol provision device 202 is used to read an NFC tag of the article 206 for use in the aerosol provision device in said unlocked state.

Note that although the operations 212 and 214 are shown as separate steps, this is not an essential feature of all example embodiments. The operations 212 and 214 may be performed in a different order, or in parallel.

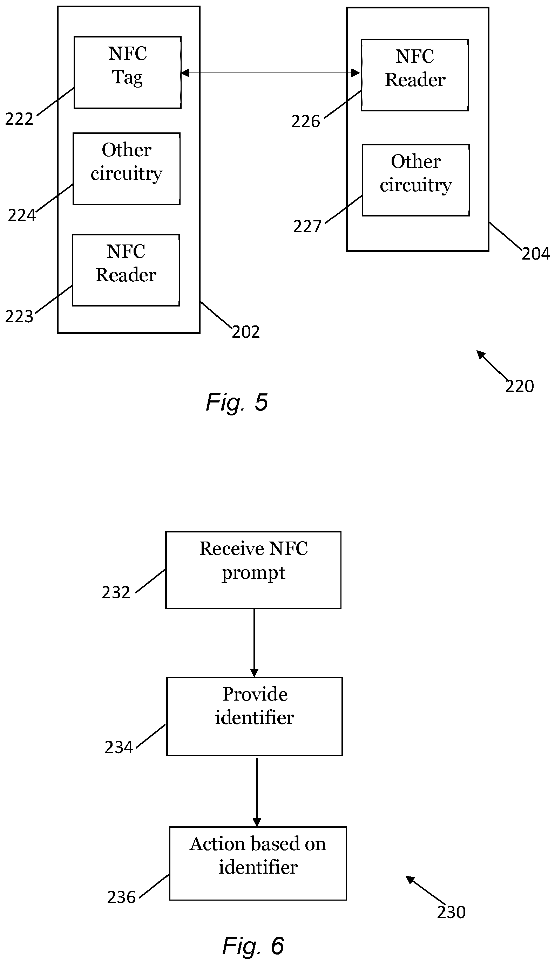

FIG. 5 is a block diagram of a system, indicated generally by the reference numeral 220, in accordance with an example embodiment. The system 220 includes the aerosol provision device 202 and the external device 204 described above. The system 220 may be used to implement the operation 212 of the algorithm 210.

The aerosol provision device 202 comprises a near-field communication (NFC) tag 222, an NFC reader 223 and other circuitry 224. The other circuitry 224 may implement other features of the aerosol generating device (such as some or all of the features of the device 10 or the device 100 described above). For example, the other circuitry 224 may be include a heater for heating article 206. The other circuitry may include one or more processors or control modules.

The external device 204 comprises a near-field communication (NFC) reader 226 and other circuitry 227. The other circuitry 227 may, for example, include a user interface and/or a controller/processor.

When in sufficiently close proximity, a two-way communication is provided between the NFC tag 222 of the device 202 and the NFC reader 226 of the external device 204 (as indicated by the arrow in FIG. 5). The link may enable the NFC reader 226 to identify the aerosol provision device 202 based on an identifier stored by the NFC tag 212.

FIG. 6 is a flow chart showing an algorithm, indicated generally by the reference numeral 230, in accordance with an example embodiment. The algorithm 230 may be implemented (at least in part) at the aerosol provision device 202 described above.

The algorithm 230 starts at operation 232, where the near-field communication (NFC) tag 222 of the aerosol provision device 202 receives a prompt to provide an identifier for the aerosol provision device to an external device (i.e. the external device 204).

At operation 234, the requested identifier (which may be stored in a memory of the NFC tag 222) is provided to the external device in response to the prompt. The operations 232 and 234 are therefore example implementations of the operation 212 of the algorithm 210 described above.

At operation 236, action is taken by (or under the control of) the external device 204 based, at least in part, on the identifier received in the operation 234 (i.e. the identifier stored by the NFC tag 222). For example, if the device 202 is in a locked state, the identifier may be used to transition the device 202 from a locked state to an unlocked state under the control of said external device. Other actions that might take place during the operation 236 include setting up a communication link (e.g. a Bluetooth^{®} link) between the device 202 and the external device 204, authenticating a user and/or launching an application (App) at the external device 204. Such an application may, for example, be used to control aspects of the aerosol provision device 202 (e.g. in response to controls from a user) and/or to provide a user interface to display information to and/or receive commands from a user.

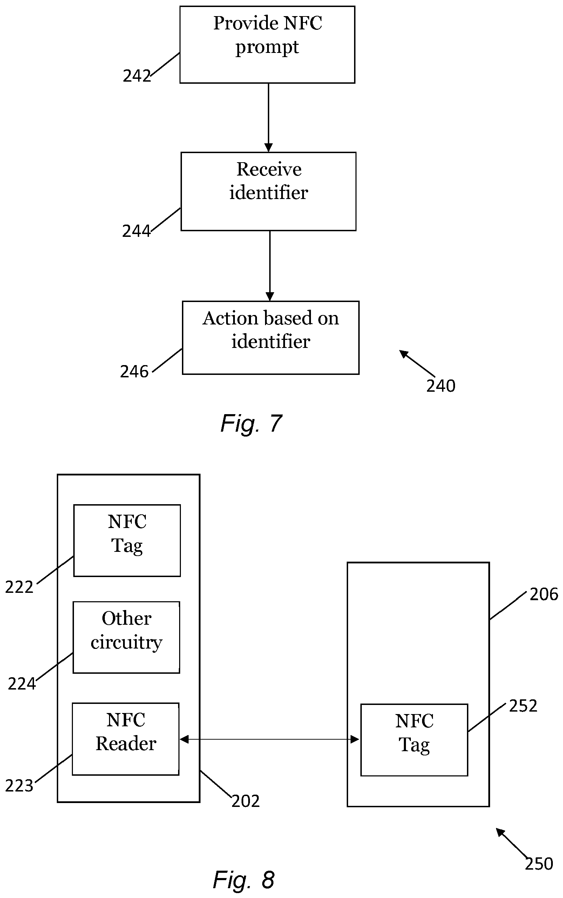

FIG. 7 is a flow chart showing an algorithm, indicated generally by the reference numeral 240, in accordance with an example embodiment. The algorithm 240 may be implemented at the external device 204 described above.

The algorithm 240 starts at operation 242, where the prompt discussed above is provided by the NFC reader 226 of the external device 204 to the aerosol provision device 202. The prompt provided in the operation 242 is the prompt received in the operation 232 discussed above.

At operation 244, an identifier is received at the external device 204. The identifier received in the operation 244 is the identifier provided in the operation 234 discussed above.

At operation 246, action is taken by (or under the control of) the external device 204 based on the identifier received in the operation 244 (i.e. the identifier stored by the NFC tag 212). For example, as discussed above, if the device 202 is in a locked state, the operation 246 may comprise the device 204 controlling the unlocking of the device 202 based on the identifier received in the operation 234. Other actions that might take place during the operation 236 might include setting up a communication link (e.g. a Bluetooth^{®} link) between the device 202 and the external device 204.

Thus, the NFC tag 222 and the NFC reader 226 may work together to unlock the aerosol provision device 202 from an initially locked state. In some example embodiments, the other circuitry 227 of the external device 204 may include a fingerprint reader, face recognition software or a simple passcode or password entry system that enables the external device 204 to control user access to the system. A further verification step (such as a passport verification procedure) may be implemented the first time that a user accesses the system. The skilled person will be aware of many other unlocking and verification procedures that could be used.

FIG. 8 is a block diagram of a system, indicated generally by the reference numeral 250, in accordance with an example embodiment. The system 250 comprises the aerosol provision device 202 and the article 206 described above. As discussed above, the aerosol provision device 202 comprises an NFC tag 222, an NFC reader 223 and other circuitry 224. The article 206 includes an NFC tag 252 and also includes other elements not shown in FIG. 7 (such as elements of the consumable 14 or the article 110 described above).

When the device 202 and the article 206 are in sufficient proximity, the NFC reader 223 of the device 202 can be in two-way communication with the NFC tag 252 of the article 206 (as indicated by the arrow in FIG. 8). For example, the NFC reader 223 may be used to read the NFC tag 252 for use in the control of the use of the article 206 by the device 202 (thereby implementing operation 214 of the algorithm 200 described above).

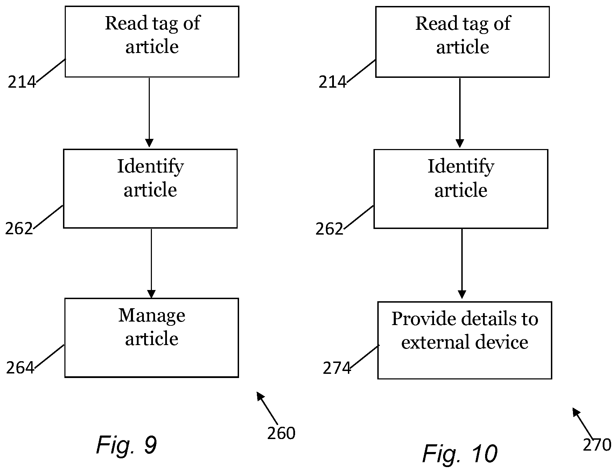

FIG. 9 is a flow chart showing an algorithm, indicated generally by the reference numeral 260, in accordance with an example embodiment.

The algorithm 260 starts at operation 214 where, as discussed above, the NFC reader 223 reads the NFC tag 252 of the article 206.

At operation 262, the article 206 is identified based on the information obtain in the operation 214 (e.g. based on an identifier stored within a memory of the NFC tag 252). The information obtained from the tag may include other information, such as a number of puffs that can be provided by the article 206.

At operation 264, the article is manged (by the device 202) based, at least in part, on information obtained said article by the NFC reader 223. The operation 264 may include controlling drive signals (e.g. duration and amplitude of such signals) for a heater for heating the article. Other or alternative operations might include authenticating the article (e.g. verifying that the article is a genuine article) or managing a puff count (e.g. decrementing a puff count on use of the article).

As discussed above, the NFC tag 222 of the aerosol provision device 202 can be used, for example, during a device-unlock process (e.g. in communication with an external device such as a mobile communication device). Once unlocked, the NFC tag 222 may no longer be needed. Instead, device NFC reader 223 can be used in normal operation, for example to detect or identify inserted articles (e.g. pods, sticks or other consumables), having NFC tags.

The control of the article 206 may be independent of the interaction with the external device 204. Indeed, the external device may not be present when the algorithm 260 is implemented.

FIG. 10 is a flow chart showing an algorithm, indicated generally by the reference numeral 270, in accordance with an example embodiment.

The algorithm 270 starts at operation 214 where, as discussed above, the NFC reader 223 reads the NFC tag 252 of the article 206.

At operation 262, the article 206 is identified based on the information obtain in the operation 214 (e.g. based on an identifier stored within a memory of the NFC tag 252). The information obtained from the tag may include other information, such as a number of puffs that can be provided by the article 206.

The algorithm 270 then proceeds to operation 274 where details related to the identified article (as obtained by the NFC reader 223) are provided to the external device 204. For example, such information may be provided to a user interface (for presentation to a user) and/or to an application (App) being operated by the external device 204.

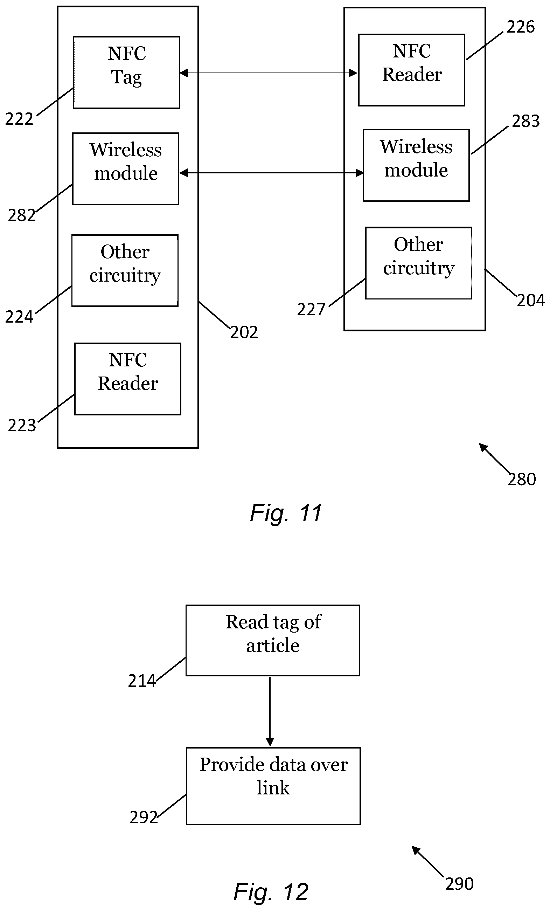

FIG. 11 is a block diagram of a system, indicated generally by the reference numeral 280, in accordance with an example embodiment. The system 280 includes the aerosol provision device 202 and the external device 204 described above.

The aerosol provision device 202 comprises the near-field communication (NFC) tag 222, the NFC reader 223 and the other circuitry 224 described above, and further comprises a first wireless communications module 282. The external device 204 comprises the NFC reader 226 and the other circuitry 227 described above, and further comprises second wireless communications module 283. The wireless communication modules 282, 283 may be Bluetooth^{®} modules (although many other communications protocols could be used).

The NFC reader 226 of the external device 204 and the NFC tag 222 of the aerosol provision device 202 may be in two-way communication (when the devices 202 and 204 are sufficiently close together). Furthermore, the first and second wireless communication modules 282 and 283 may be in two-way communication with one another. The communication modules 282, 283 may be able to communicate over greater separate distances than the NFC tag and reader pair. Alternatively, or in addition, the communication protocol between the wireless communication modules may be simpler that the NFC tag and reader pair, or may operate more reliably.

FIG. 12 is a flow chart showing an algorithm, indicated generally by the reference numeral 290, in accordance with an example embodiment.

The algorithm 290 starts at operation 214 where, as discussed above, the NFC tag 252 of the article 206 is read by the NFC reader 223 of the aerosol provision device 202.

At operation 292, data obtained from the NFC tag 252 is provided to the external device 204. For example, data may be sent from the first wireless communication module 282 of the aerosol provision device 202 to the second wireless communication module 283 of the external device 204. Thus, the algorithm 290 may use an NFC connection to trigger communications over a wireless connection. Sending communications over the wireless communication may be easier or more reliable than sending communications over an NFC connection, as mentioned above.

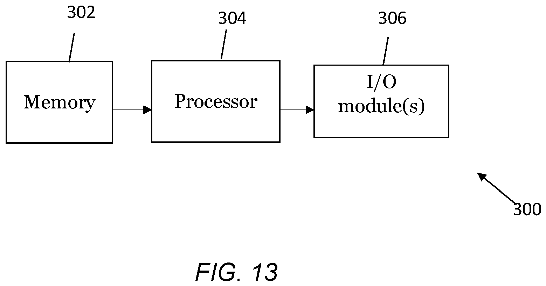

FIG. 13 is a block diagram of a processing system, indicated generally by the reference numeral 300, that may be used to implement one or more of the example embodiments described previously. The processing system 300 may, for example, be (or may include) the apparatus referred to in the claims below.

The processing system 300 may comprise a processor 304, a memory 302 coupled to the processor (e.g. comprising a random access memory (RAM) and/or a read only memory (ROM)). The processing system 300 may also comprise one or more input/output (I/O) modules 306, such as one or more user interface modules.

The memory 302 may comprise code which, when executed by the processor 304 implements aspects of the methods and algorithms described herein.

The memory 302 and the processor 304 may form part of the other circuitry 224 of the aerosol provision device 202 described above. The I/O module 306 may form part of the aerosol provision device 202 but may also (or alternatively) or part of the external device 204 described above.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

## Claims

1. A method comprising:
using a near-field communication tag of an aerosol provision device to provide an identifier for the aerosol provision device to an external device in response to a prompt from a near-field communication reader of the external device, wherein the identifier is used to transition the device from a locked state to an unlocked state under the control of said external device; and
using a near-field communication reader of the aerosol provision device to read a near-field communication tag of an article for use in the aerosol provision device in said unlocked state.

2. A method as claimed in claim 1, further comprising using the near-field communication reader of the aerosol provision device to identify said article.

3. A method as claimed in claim 1 or claim 2, further comprising managing the article based, at least in part, on information obtained from said article by said near-field communication reader.

4. A method as claimed in any one of claims 1 to 3, further comprising communicating information obtained from said article by said near-field communication reader to said external device.

5. A method as claimed in any one of claims 1 to 4, wherein the external device is a mobile communication device.

6. A method as claimed in any one of claims 1 to 5, wherein the external device is a point-of-sale device.

7. An aerosol provision device comprising:
a near-field communication tag for use, in combination with an external device, for unlocking said aerosol provision device from an initially locked state; and
a near-field communication reader configured to read a near-field communication tag of an article for use in the aerosol provision device.

8. An aerosol provision device as claimed in claim 7, wherein the near-field communication reader is configured to identify said article.

9. An aerosol provision device as claimed in claim 7 or claim 8, further comprising a wireless communications module for communicating with said external device in the unlocked state.

10. An aerosol provision device as claimed in claim 9, wherein said wireless communication module is configured to communicate information obtained from said article by said near-field communication reader to said external device.

11. An aerosol provision device as claimed in any one of claims 7 to 9, wherein the external device is a mobile communication device and/or a point-of-sale device.

12. A system comprising an aerosol provision device as claimed in any one of claims 7 to 11 and further comprising said external device.

13. A system as claimed in claim 12, wherein said external device is configured to unlock the aerosol provision device in the event that the identifier is recognised by the external device.

14. A system as claimed in claim 12 or claim 13, wherein the external device comprises a user interface.

15. A computer program comprising instructions for causing an apparatus to perform at least the following:
provide an identifier for an aerosol provision device as stored at a near-field communication tag of the aerosol provision device to an external device in response to a prompt from a near-field communication reader of the external device, wherein the identifier is used to transition the device from a locked state to an unlocked state under the control of said external device; and
read a near-field communication tag of an article for use in the aerosol provision device in said unlocked state using a near-field communication reader of the aerosol provision device to read a near-field communication.
